# EUROPEAN PATENT SPECIFICATION

(11) **EP 3 208 517 B1**
(45) Date of publication and mention of the grant of the patent: **17.07.2019**
(21) Application number: 17156117.8
(22) Date of filing: 14.02.2017
(51) Int. Cl.: F21L 14/04, B60P 3/18, F21V 21/22, F21V 21/36

(54) **DEVICE AND PROCEDURE FOR MONITORING AND CONTROLLLING TELESCOPIC LIGHT TOWERS**
VORRICHTUNG UND VERFAHREN ZUR ÜBERWACHUNG UND STEUERUNG VON TELESKOPISCHEN LICHTMASTEN
DISPOSITIF ET PROCÉDÉ DE SURVEILLANCE ET DE CONTRÔLE DE TOURS TÉLESCOPIQUES

(30) Priority: 19.02.2016 ES 201630193
(43) Date of publication of application: 23.08.2017
(73) Proprietor: Grupos Electrogenos Europa, S.A., 50450 Muel (Zaragoza) (ES)
(72) Inventor: TOLON MARTIN, Tamara, 2610 Wilrijk (BE); SANTA BARBARA, José Maria, 2610 Wilrijk (BE)
(74) Representative: Van Minnebruggen, Ewan Benito Agnes

(56) References cited:
- EP-A2- 0 196 888
- WO-A1-2006/047836
- GB-A- 2 491 421
- KR-B1- 100 622 541
- US-A1- 2015 217 981
- US-B1- 6 820 980
- US-B1- 8 505 684

## Description

The present invention relates to a device and procedure for the monitoring and control in telescopic light towers.

### Technical field

This invention relates to the field of means for controlling conditions of installation, operation and assurance of structural safety and prevention of tipping in telescopic light towers, preferably transportable ones.

The fundamental aim of the invention is to develop a monitoring and control device and procedure that enables automatic adjustment of the mast height and the height and pressure on the support elements of the base of a telescopic tower, in such a way that the risk of tipping is minimised and maximum deployment of the mast is permitted.

### Background of the invention

Currently the need for lighting or additional lighting has led to widespread use of stand-alone light towers in many environments, from construction sites to public events. Given the functionality of these devices, most of them consist of a mast of a greater or lesser length, which is typically telescopic, and which is deployed to position the spotlight as high as possible, this way illuminating a larger area.

Safe use of telescopic light towers means structural safety and prevention of tipping must be ensured in all conditions of tower use.

In the design phase of a telescopic light tower it must be guaranteed that the tower complies with current regulations on structural safety and prevention of tipping.

However, in spite of ensuring a good design of the telescopic tower, its structural safety and prevention of tipping may be jeopardised by the conditions in which the tower base is installed, the conditions in which the mast is deployed and other factors external to the installation of the base itself.

Some of these factors relating to the installation of the telescopic tower directly affect structural safety and/or the tipping moment.

These direct factors comprise for example mechanical factors relating to the different parts of a telescopic light tower such as:
- Horizontality of the telescopic light tower base elements and even distribution of the load on the telescopic tower support elements;
- Level of extension of the mast;
- Orientation of the floodlights which determine the effective surface area facing the wind in specific working conditions;
- Deterioration of the quality or strength of the tower's structural elements.

Other direct factors comprise site constraints such as:
- Characteristics of the terrain, such as ground strength and others;
- Presence of obstacles on the terrain which may hinder correct installation;
- Slope or gradient of terrain;
- Presence of objects or obstacles that affect the extending of the mast.

However, there are other external factors that may indirectly affect structural safety and/or cause the structure to tip over when the tower is in use.

Such indirect factors comprise:
- Ambient factors, wind, rain, ice, etc.;
- Conditions of use and handling of the tower, impacts, blows, etc. ;
- The surface area facing the wind.

On the basis of this, solutions have been proposed which define the essential structure or intend to incorporate additional functions.

Hence, patent GB2491421 describes a mobile light tower comprising a base unit including an extendable mast adapted to move between a retracted position and an extended position, including a controller and a wind speed sensor, the controller being adapted to lower the extendable mast to an intermediate position, between the retracted position and the extended position, when the wind sensor detects that a predetermined wind speed has been exceeded.

Another solution is presented in patent AU2010100828 in which a solar light tower is described, comprising a retractable mast, a wind speed detector that acts to retract the mast when the wind speed exceeds a predetermined threshold and also including GPS tracking means and a high voltage proximity alert system.

Another solution is presented in WO2006047836 in which a portable lighting tower is described, comprising a chassis mounted on a plurality of wheels, a cabin mounted on the chasis and an extendable mast. An automated process being further described, in which the cabin is levelled by controlling four stabilizers provided in each of the four corners of the cabin to engage the ground.

The use of wind gauges or levelling the cabin as a means of ensuring mast stability would not be useful for detecting other conditioning factors that could cause the tower to collapse, such as impacts by machinery, landslides, ground vibrations due to explosions or to machinery or mechanical failures in the tower itself.

### Description of the invention

To overcome the aforementioned problems, a device and procedure of monitoring and control in telescopic light towers have been devised to carry out the automatic control of installation and operating conditions in order to assure structural safety and prevention of tipping in telescopic light towers, being adaptable to both newly manufactured telescopic towers and already existing ones.

The device for the monitoring and control of a telescopic light tower according to the invention comprises at least one lower sensor module positioned on or near the base of the telescopic light tower which lower sensor module comprises sensors;
whereby the device further comprises at least one upper sensor module positioned on or near the mast of the telescopic light tower which upper sensor module comprises sensors;
whereby the device further comprises an electronic control, module which comprises:
- One or several inputs connecting to a lower sensor module and an upper sensor module;
- One or several outputs connecting to one or more of the following:
   ∘ one or more of the support elements of the base of the tower,
   ∘ an extension mechanism of the mast,
   ∘ an retraction mechanism of the mast,
   ∘ an orientation mechanism of floodlights,
   ∘ visual or acoustic aids for user indication;
- A signal adapting mode;
- A processing mode;
whereby the sensors of the upper sensor module are chosen from among:
- at least one distance sensor (9) positioned at the top end of the mast (3),
- at least one measuring sensor (10) of the deformation of the mast (3),
- one or more accelerometers (11) and/or gyroscope sensors of positioning and relative situation, positioned at points on the mast (3),
- at least one height sensor (12) .

The sensors from the at least one lower sensor module are preferably chosen from among:
- At least one pressure sensor to measure the force exerted on the support elements of the base. These sensors may be resistive, capacitive, piezoelectric or of any other type capable of detecting pressure on the support elements. The invention is however not limited to these types.
- One or more acceleration and/or gyroscope sensors, positioned on the base of the telescopic light tower to detect its position and relative situation.

The sensors from the at least one upper sensor module are preferably chosen from among:
- At least one distance sensor positioned at the upper end of the telescopic mast to detect objects that may affect the installation of the telescopic light tower. These sensors may be ultrasonic, laser or of any other type capable of detecting objects at a distance, allowing to act on the system in the event of detection. However, the invention is not limited to these types.
- At least one measuring sensor for the deformation of the mast. These sensors, which may be resistive, capacitive, piezoelectric or of any other type capable of detecting deformation of the mast or of the section of the mast on which they are placed. However, the invention is not limited to these types.
- One or more accelerometers and/or gyroscope sensors, positioned at points on the mast to detect its position and relative situation.
- At least one height sensor to determine the height of the mast end at all times, which may be an ultrasonic, laser or rotary encoder type sensor. However, the invention is not limited to these types.

The aforementioned processing mode of the electronic control module allows for the processing of data received from the lower sensor module, upper sensor module or any other integrated in the telescopic light tower, having the capacity to calculate values that will determine safe operating parameters for the telescopic tower in which the device is installed, based on the data supplied by the sensors, the said values including, but not being limited to, those relating to predefined thresholds or limit values.

Preferably, the electronic control module is provided with a start pushbutton.

Preferably, the electronic control module is provided with one or more auxiliary outputs for the connection of other towers or alarm outputs for external elements.

The procedure according to the invention of monitoring and control in telescopic towers by means of the device according to the invention, for the automatic control of the conditions of installation, operation and assurance of the structural safety and prevention of tipping, comprises the following phases:
- Phase 1 of initialisation comprising the step of installing the device on the telescopic light tower;
- Phase 2 comprising the steps of monitoring and control of the installation of the tower base;
- Phase 3 comprising the steps of monitoring and control of the deployment of the telescopic mast;
- Phase 4 comprising the steps of the monitoring and control of the operating conditions of the telescopic light tower,
whereby, phase 1 of the initialization comprises the step of installing at least one lower sensor module at, least one upper sensor module and an electronic control module on the telescopic light tower, directly connecting the electronic control module, by means of the output connections in order to act on one or more of the following:
- the support elements of the base of the telescopic light tower,
- the mast extension mechanism,
- the mast retraction mechanism,
- the floodlight orientation mechanism,
- the visual or acoustic indicator aids for users,
- other towers or alarm outputs for elements that are external to the system described,
whereby the signal adapting mode will adapt the data transmitted by the at least one lower sensor module (4) and/or at least one upper sensor module (8) or any other integrated in the telescopic light tower (1) and whereby the processing mode will process the data received from the at least one lower sensor module (4) and/or at least one upper sensor module (8) or any other integrated in the telescopic light tower (1), calculating and determining safe operating parameters or indicators or levels based on predefined critical and warning thresholds or limit values.

Next, the electronic control module can be connected to the lower and upper sensor modules and the connection between them is checked.

Then, the signal adapting mode of the electronic control module allows for the adapting of data transmitted by the one or more lower and/or upper sensor modules or any other integrated in the telescopic light tower.

The date can be analogue or digital data, which is transmitted to the electronic control module, by wired connection, via standard or dedicated protocols, or wirelessly, via standard or dedicated protocols, by one or more lower sensor modules, upper sensor modules or any other integrated in the telescopic light tower.

Subsequently, the following thresholds are checked
- Base warning threshold,
- Base critical threshold,
- Mast warning threshold,
- Mast critical threshold.

For example, through the processing mode of the electronic control unit, calculation of one or more of the following indicators or levels, which can be used in the following phases of the procedure, can be done:
- The base equilibrium indicator is an indicator proportional to the horizontality of the base and to the distribution of loads among the support elements. This indicator is calculated from the monitoring signals of the lower sensor module.
- The mast equilibrium indicator is an indicator proportional to the relative position of the top end of the mast in relation to the reference position of the base and it is calculated based on the signals of the measuring sensors integrated in the upper sensor module and the signals of the pressure sensors integrated in the lower sensor module.
- The current mast extension level is determined by means of the signals from the height sensor of the upper sensor module, either directly or by calculation and it defines the height of the mast end at any time.

- The safe mast extension level is determined bearing in mind the base equilibrium indicator values and the mast equilibrium indicator values calculated at any time, the signals of the distance sensor, the height sensor and any other relevant sensor that defines mast extension for safe operation.
- The allowable mast extension level is the maximum extension level permitted, which is calculated as the minimum value of the following values:
   ∘ the distance from the base of the telescopic light tower to the nearest object in the intended mast extension path,
   ∘ the maximum extension length of the mast according to its design, and
   ∘ the maximum extension length of the mast defined by the user.
- The maximum mast extension level is the maximum extension level, in the phase of monitoring and control of mast deployment, for which a mast equilibrium indicator lower than the mast warning threshold is obtained.

### Phase 2 of monitoring and control of the installation of the telescopic light tower base.

Preferably, this phase begins when the start pushbutton is activated or when the device is powered. The device will then receive certain signals in the lower sensor module, typically contact or power signals, via the pressure sensors.

Next, the electronic control module calculates the equilibrium indicator for the base using signals from the lower sensor module.

The equilibrium indicator is proportional to the horizontality of the base and to the distribution of loads among the support elements. Hence it is assumed that, in the event that any of the telescopic light tower support elements, is not in contact with the ground, an indicator value that is higher than the critical threshold of the base will be obtained.

Then, the equilibrium indicator of the base is compared against the predefined thresholds of the base in terms of structural safety and prevention of tipping, the warning threshold of the base and the critical threshold of the base, and, depending on the result of this comparison, one of the following actuation strategies is activated:
- Validation of the correct installation of base and calibration of the lower sensor module, with the "Base installation correct" signal being activated internally.
   ∘ If the base equilibrium indicator is less than the warning threshold of the base, the installation of the base of the telescopic light tower is considered to be correct in terms of structural safety and prevention of tipping.
   ∘ The device calibrates the lower sensor module in that position to use it as the reference position for the installation of the base.
   ∘ The process may continue to the following phase in the procedure, the "Base installation correct" signal being activated internally.
- Assistance for the correct installation of the base.
   ∘ If the base equilibrium indicator is equal to or higher than the warning threshold of the base, it is considered that the installation of the base of the telescopic light tower does not satisfy minimum requirements of structural safety and prevention of tipping moment.
   ∘ The device determines the strategy for actuation on the support elements of the tower base for its correct installation, activating the outputs for the support elements of the tower base and/or the outputs for the acoustic or visual aids.
   ∘ This actuation strategy considerably reduces the time required to correctly install the base as it aids the operator in charge of installation during the process.
   ∘ Via the processing mode, repeated calculations of the base equilibrium indicator are carried out, comparing them with the warning and critical thresholds of the base and defining of an actuation strategy until the correct conditions for installing the tower base are met.

In this phase the effects that affect the stability and correct installation of the base of the telescopic light tower are taken into consideration. It is quite possible that, in addition to the wind, other weather conditions (rain, hail, snow and/or formation of ice) or other factors affecting the state of the ground where the telescopic light tower is put into operation, may affect the stability of the tower base and cause the telescopic light tower setup to be unstable.

External causes of a same magnitude may affect the stability of a telescopic tower differently depending on the design characteristics and installation.

For example, the same wind speed may jeopardise the stability of a tower that is too high or that has not been installed correctly, while not affecting the stability of a tower with a correctly installed base and with floodlights oriented differently.

Traffic and/or nearby activities may also cause vibrations and affect the correct installation of the light tower: for example, at a mine, when trucks pass near to a light tower.

### Phase 3 of monitoring and control of the deployment of the telescopic mast.

Preferably, this phase begins when the "Base installation correct" signal is activated, receiving and processing the monitoring signals from the upper sensor module and the lower sensor module.

Subsequently, the device activates the signals acting on the mast extension and/or retraction mechanism and/or the visual or acoustic aids for the extension or retraction of the mast, limited to the allowable extension level, calculating the following values:
- the presence of objects in the intended mast extension path,
- the maximum extension length according to the design, and
- the maximum extension level defined by the user.

Hereby, the detection of objects is carried out from the inputs of the distance sensors. Calculations are preferably continuously updated as extending of the telescopic mast progresses.

During the process of extending the mast, the processing mode receives signals from the upper sensor module and the lower sensor module and it calculates the **mast equilibrium indicator at the current level of mast extension.**

Then, the mast equilibrium indicator is compared against the predefined mast thresholds in terms of structural safety and prevention of tipping (mast warning threshold and mast critical threshold) and one of the following actuation strategies is activated depending on the result of the said comparison:
- Maximum mast extension guaranteeing compliance with safety conditions
   ∘ If the mast equilibrium indicator is lower than the mast warning threshold and the current mast extension level is lower than the allowable mast extension level, the device calculates the safe mast extension level, this being the extension level closest to the allowable mast extension level that ensures compliance with minimum requirements of structural safety and prevention of tipping moment and that is lower than the allowable mast extension level.
   ∘ The allowable mast extension level is calculated as the minimum value of the distance to the nearest object in the mast extension path, the maximum mast extension length, according to the design, and the maximum mast extension level defined by the user. The fact that the distance to the nearest object in the path of the mast is taken into account when calculating the allowable mast extension level, considerably increases safety during the process of extending the mast.
   ∘ The device activates the signals for actuation on the mast extension mechanism and/or the visual or acoustic aids for the extension of the mast.
   ∘ This actuation strategy considerably reduces the time required for correct deployment of the mast as it aids the operator in charge of installation during the process.
   ∘ Once the current mast extension level has been modified, the process starts again with calculation of the mast equilibrium indicator.
- Validation of correct deployment of the mast and definition of maximum mast extension level.
   ∘ If the mast equilibrium indicator is lower than the mast warning threshold and the current extension level of the mast is equal to the allowable mast extension level, it is considered that the current mast extension level is correct in terms of structural safety and prevention of tipping moment and so the current mast extension level is defined as the maximum mast extension level.
   ∘ The process continues with the following phase of the procedure and activates the "Mast deployment correct" signal.
- Retraction of the mast to the maximum extension level that ensures compliance with safety conditions
   ∘ If the mast equilibrium indicator is higher than the mast warning threshold, and lower than the mast critical threshold, it is considered that the current mast extension level does not comply with minimum requirements in terms of structural safety and prevention of tipping moment.
   ∘ The device calculates the **safe mast extension level,** this being the extension level closest to the current extension level that ensures compliance with the minimum requirements of structural safety and prevention of tipping moment and that is lower than the current mast extension level and the allowable mast extension level.
   ∘ This reaction, by retracting the mast until a functional and safe operating mode is found, maintaining stability, maximises the availability of the lighting service, even in adverse conditions.
   ∘ Mast extension is modified manually or automatically by means of the **mast retraction mechanism** so that the mast extension is equal to the safe mast extension level. Once the current mast extension level has been modified, the process starts again, with the calculation of the mast equilibrium indicator at the current mast extension level.
- Activation of the safety alarm status and modification of the installation conditions of the base to conditions of maximum safety and stability.
   ∘ If the mast equilibrium indicator is higher than the mast critical threshold, it is considered that the current mast extension level entails a critical risk in terms of structural safety and the tipping moment risk of the structure. The device activates the safety alarm status. The following outputs are activated:
   ∘ Mast extension is modified manually or automatically by activating the signals for actuation on the retraction mechanism and/or the visual or acoustic outputs, so that mast extension is zero, that is, the mast retracts completely.
   ∘ The base installation conditions are modified manually or automatically by activating the signals for actuation on the support elements and/or the visual or acoustic outputs so that the base is in a safe position.
   ∘ The floodlight orienting mechanism is modified to minimise the surface area facing the wind and to protect the floodlights mechanically. For this purpose, the device activates the signals for actuation on the floodlight orienting mechanism and/or the visual or acoustic outputs, so that the floodlights are in a safe position.
   ∘ The device is only reactivated when the start pushbutton signal is reactivated.

From the point of view of operation and lighting service, the device and procedure proposed maximise the availability of the lighting service even in adverse conditions, which is an important advantage, due to the fact that in the procedure of automatic adjustment of the mast height and adjustment of the height and pressure on the support elements, the device always aims to maximise deployment of the mast in stable tower operating conditions.

In the process of extending the mast, the allowable extension level is restricted taking into account not only design criteria and operating requirements, but also depending on the detection of objects in the mast extension path, since, if the presence of high-voltage cables or other objects such as roofs, articulated jibs or machinery around the tower were to be detected at the telescopic tower site, the device would detect the presence of such an object in the path and consequently limit the extending of the mast to avoid any possible collision.

### Phase 4 of monitoring and control of the operating conditions of the telescopic light tower.

Preferably, this phase starts if the "Base installation correct" signal and the "Mast installation correct" signal are active.

During the period in which a telescopic tower is in use, different factors may arise, which directly or indirectly affect the structural safety and tipping moment of the telescopic tower. Therefore the operating conditions of the tower may need to be modified.

This is regulated during Phase 4, whereby the electronic control module continuously receives and processes the signals from the lower sensor module and from the upper sensor module to calculate the equilibrium indicator of the base and the equilibrium indicator of the mast, comparing said indicators with the predefined critical and warning thresholds.

Depending on the result of the comparison of the base equilibrium indicator with its corresponding thresholds, and the mast indicator with its corresponding thresholds, one of the following actuation strategies is activated:
- Validation of the operating conditions of the tower and continuation of monitoring and control
   ∘ If the base equilibrium indicator is lower than the base warning threshold and the mast equilibrium indicator is lower than the mast warning threshold, and the current mast extension level **is equal to** the maximum mast extension level, monitoring and control of the telescopic light tower operating conditions continues.
- Maximum extension of mast guaranteeing compliance of safety conditions
   ∘ If the base equilibrium indicator is lower than the base warning threshold and the mast equilibrium indicator is lower than the mast warning threshold, and the current mast extension level **is lower than** the maximum mast extension level, the device calculates the safe mast extension level, this being the extension level closest to the maximum mast extension level that ensures compliance with the minimum requirements of structural safety and prevention of tipping moment and that is lower than the allowable mast extension level.
   ∘ The allowable mast extension level is calculated as the minimum value of the distance to the nearest object in the mast extension path, the maximum mast extension length, according to the design, and the maximum mast extension level defined by the user. The fact that the distance to the nearest object in the mast's path is continuously taken into account in the calculation notably increases safety in the process of monitoring and control of the tower's operating conditions.
   ∘ The device activates the signals for actuation on the mast extension mechanism and/or the visual or acoustic aids for the extension of the telescopic mast, continuing with the monitoring and control of the tower's operating conditions.
- Modification of the operating conditions of the tower to ensure safe operation of the tower mast.
   ∘ If the base equilibrium indicator is lower than the base warning threshold and the mast equilibrium indicator is higher than the mast warning threshold and lower than the mast critical threshold,
   ∘ Firstly, the device defines the strategy for actuation on the support elements of the tower base to indirectly influence the correct installation of the mast. The device activates the outputs for the support elements of the base and/or the acoustic or visual outputs.
   ∘ The device updates the mast equilibrium indicator in the new conditions.
      ▪ If the indicator is lower than the warning threshold, monitoring and control of the operating conditions of the tower continue.
      ▪ If the indicator is higher than the warning threshold and lower than the critical threshold,
         - the device calculates a safe mast extension level and activates the signals for actuation on the mast retraction mechanism and/or the visual or acoustic aids, for retraction of the telescopic mast.
         - This reaction, by retracting the mast until a functional and safe operating mode is found, maintaining stability, maximises the availability of the lighting service, even in adverse conditions.
         - Monitoring and control of the operating conditions of the tower continue.
      ▪ If the indicator is higher than the critical threshold, the device activates the safety alarm status.
- Modification of the operating conditions of the tower to ensure safe operation of the tower base.
   ∘ If the base equilibrium indicator is equal to or higher than the base warning threshold and lower than the base critical threshold, the device first defines the strategy for actuation on the base support element, to indirectly influence correct installation of the mast.
   ∘ The device activates the outputs for the support elements of the tower base and/or the acoustic or visual outputs.
   ∘ The device updates the mast equilibrium indicator in the new conditions.
      - If the indicator is lower than the warning threshold, monitoring and control of the operating conditions of the tower continue.
      - If the indicator is higher than the warning threshold, and lower than the critical threshold, the device calculates a safe mast extension level and activates the signals for actuation on the mast retraction mechanism and/or the visual or acoustic aids, for retraction of the telescopic mast. Monitoring and control of the operating conditions of the tower continue.
      - If the indicator is higher than the critical threshold, the device activates the safety alarm status.
- Activation of the safety alarm status and modification of base installation conditions to conditions of maximum safety and stability.
   ∘ If the base equilibrium indicator is equal to or higher than the base critical threshold, or if the mast equilibrium indicator is higher than the mast critical threshold, the device activates the safety alarm status.
   ∘ Mast extension is modified manually or automatically by activating the signals for actuation on the retraction mechanism and/or the visual or acoustic outputs, so that mast extension is zero, that is, the mast retracts completely.
   ∘ The base installation conditions are modified manually or automatically by activating the signals for actuation on the support elements and/or the visual or acoustic outputs so that the base is in a safe position.
   ∘ The floodlight orienting mechanism is modified to minimise the surface area facing the wind and to protect the floodlights mechanically. For this purpose, the device activates the signals for actuation on the floodlight orienting mechanism and/or the visual or acoustic outputs, so that the floodlights are in a safe position.

A person skilled in the art will easily comprehend that the characteristics of different embodiments can be combined with the characteristics of other possible embodiments, provided that the combination is technically possible.

### Advantages of the invention

The device and procedure of monitoring and control in telescopic light towers that is advocated, affords numerous advantages over those currently used, notably its application prevents the collapse of the light tower, by ensuring the stability of the telescopic tower rather than merely reacting to the external factors that could affect stability.

Incorporating the device that is the object of the invention in telescopic light towers, permits to react by retracting the mast until a functional and safe operating mode is found, maintaining stability, in the event of detecting conditioning factors that could cause the collapse of the tower, such as impacts by machinery, landslides, ground vibrations due to explosions or machinery or mechanical failures in the telescopic tower itself. Given that the device reacts in an active manner, it is capable of extending the mast again, to reach the allowable extension level, once the factors compromising stability have ceased

Another advantage resulting from the previous one is the stability of the telescopic tower that is obtained with the implementation of the device, allowing a stable position to be maintained in adverse weather conditions such as rain, hail, snow and/or the formation of ice.

Another important advantage is that stability of the telescopic tower is guaranteed by means of an electronic module in constant communication with at least one lower sensor module, positioned on the base of the telescopic tower and at least one upper sensor module, positioned on the mast, automatically maintaining the levels of equilibrium of the base and allowable extension of the mast according to ambient conditions, the physical characteristics of the terrain, the slope or gradient of the terrain and the conditions of use and handling of the tower, impacts, blows, etc.

As an added advantage, it is important to note that the electronic control module includes a signal adapting mode and a processing mode in which the predefined thresholds or limit values are included, acting directly on the support elements of the base, the mast retraction and extension mechanisms, the orientation of the floodlights and the visual or acoustic aids.

Additionally, the device maximises availability of the lighting service, even in adverse conditions, due to the fact that in the procedure of automatic adjustment of the mast height and adjustment of the height and pressure on the support elements of the base, the device always aims to maximise the deployment of the mast in stable tower operating conditions.

An important and noteworthy advantage is that the monitoring and control procedure of the device achieves a considerable reduction in the time required to correctly install and deploy the telescopic tower, as it assists the operator in charge of installation during the process.

Along the same lines, an advantage to be highlighted is that the monitoring and control procedure of the device notably increases safety in the process of extending the mast, given that it limits the allowable extension level taking into account not only design criteria and operating requirements but also depending on the detection of objects in the mast extension path.

Finally, and also in relation to safety, an added advantage is that during the monitoring and control procedure of the device, a safety alarm status is activated if critical conditions in the mast and/or on the base are detected, proceeding to totally retract the mast and to modify the installation conditions of the base to conditions of maximum safety and stability.

### Description of the figures

To gain a better understanding of the object of this invention, a preferred practical embodiment is shown in the drawing attached.
Figure 1 shows a schematic view of a telescopic light tower incorporating the device and its preferred position.
Figure 2 shows a schematic view of the lower sensor module and upper sensor module connected to an electronic control module.

### Preferred embodiment of the invention

The conformation and characteristics of the invention can be better understood in the following description that relates to the attached figures.

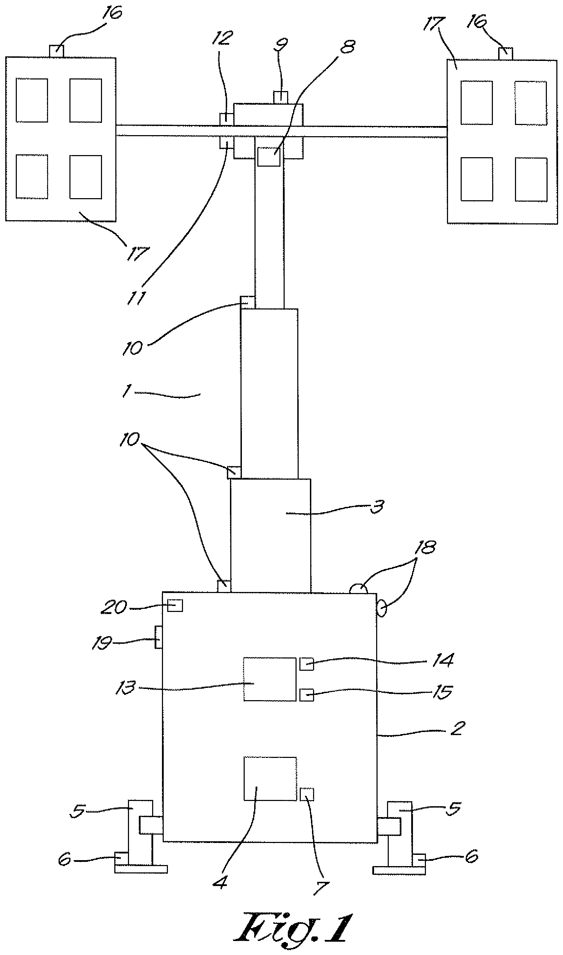

As can be seen in figure 1, a schematic view is provided of a telescopic light tower 1 with a base 2 and a mast 3.

The base 2 incorporates a lower sensor module 4 in communication with the support elements 5 of the base 3, the stability and correct installation of the base 2 being controlled by means of one or more pressure sensors 6 and acceleration sensors 7.

It also shows a upper sensor module 8 positioned on the mast 3 in communication with distance sensors 9, intended to detect objects, measuring sensors 10, intended to detect deformation of the mast 3, accelerometers or gyroscope sensors 11 to detect the position and relative situation of the mast 3 and height sensors 12 to define the height of the end of the mast 3 at all times.

It shows an electronic control module 13 that receives the signals from the lower module 4 and the top module 8 for direct actuation on the support elements 5, extension mechanism 14 of the mast 3, retraction mechanism 15 of the mast 3, orientation mechanism 16 of the floodlights 17 of the telescopic light tower 1, visual or acoustic aids 18, connection to other telescopic towers or alarm outputs for external elements 19, via a signal adapting mode and a processing mode, automatically maintaining the equilibrium levels of the base and the allowable mast extension, depending on ambient conditions, physical characteristics of the terrain, the slope or gradient of the terrain and the conditions of use and handling of the tower, impacts, blows, etc.

The electronic control module 13 is further provided with a start pushbutton 20 to activate the module 13.

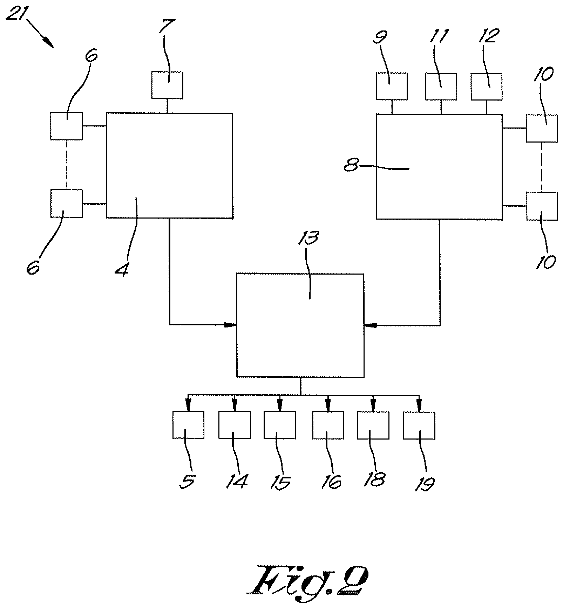

Figure 2 shows a flow diagram indicating an electronic control module 13 receiving signals from at least one lower sensor module 4 with pressure sensors 6 and acceleration sensors 7 and from at least one upper sensor module 8 with distance sensors 9, measuring sensors 10, accelerometers or gyroscope sensors 11 and height sensors 12.

It also shows the connection of the electronic control module 13 to the support elements 5 of the base 2, the extension mechanism 14 and the retraction mechanism 15 of the mast 3, the orientation mechanism 16 of the floodlights 17, the visual or acoustic aids 18 and auxiliary outputs 19 to proceed to actuate on them during a procedure developed in the following phases:
- Phase 1 of initialisation
- Phase 2 of monitoring and control of the installation of the tower base
- Phase 3 of monitoring and control of the deployment of the telescopic mast and
- Phase 4 of monitoring and control of the operating conditions of the telescopic light tower.

The electronic control module 13, the upper sensor module 5 and the lower sensor module 4 together form a device 21 according to the invention.

The present invention is in no way limited to the form of embodiment described by way of an example and represented in the figures, however, such a device for the monitoring and control of a telescopic light tower and a procedure of monitoring and control in telescopic light towers by means of such a device can be realized in various ways without leaving the scope of the invention.

## Claims

1. Procedure of monitoring and control of a telescopic light tower (1), the telescopic light tower (1) being provided with a device (21) comprising at least one lower sensor module (4) positioned on or near the base (2) of the telescopic light tower (1) which lower sensor module (4) comprises sensors (6, 7); whereby the device (21) further comprises at least one upper sensor module (8) positioned on or near the mast (3) of the telescopic light tower (1) which upper sensor module (8) comprises sensors (9, 10, 11, 12) and whereby the device (21) further comprises an electronic control module (13) comprising one or several inputs connecting to a lower sensor module (4) and an upper sensor module (8); **characterised in that** it comprises the following phases:
• Phase 1 of initialization comprising the step of installing the device (21) on the telescopic light tower (1);
• Phase 2 comprising the steps of monitoring and control of the installation of the telescopic tower base (2);
• Phase 3 comprising the steps of monitoring and control of the deployment of the mast (3);
• Phase 4 comprising the steps of monitoring and control of the operating conditions of the telescopic light tower (1)
whereby, phase 1 of the initialization comprises the step of installing at least one lower sensor module (4), at least one upper sensor module (8) and an electronic control module (13), the electronic control module (13) being directly connected via the output connections to act on one or more of the following:
• the support elements (5) of the base (2) of the telescopic light tower (1),
• the extension mechanism (14) of the mast (3),
• the retraction mechanism (15) of the mast (3),
• the orientation mechanism (16) of the floodlights (17),
• the visual or acoustic aids (18) for user indication,
• auxiliary outputs (19); whereby the electronic control device further comprises a signal adapting mode and a processing adapting mode;
whereby the signal adapting mode will adapt the data transmitted by the at least one lower sensor module (4) and/or at least one upper sensor module (8) or any other integrated in the telescopic light tower (1) and whereby the processing mode will process the data received from the at least one lower sensor module (4) and/or at least one upper sensor module (8) or any other integrated in the telescopic light tower (1), calculating and determining safe operating parameters or indicators or levels based on predefined critical and warning thresholds or limit values.

2. Procedure of monitoring and control, according to claim 1, **characterised in that** in phase 1 of initialization, the processing mode of the electronic control module (13) calculates at least one or more of the following indicators or levels that will be used in the following phases of the procedure:
• Equilibrium indicator of the base (2),
• Equilibrium indicator of the mast (3),
• Current level of extension of the mast (3),
• Safe level of extension of the mast (3),
• Allowable level of extension of the mast (3),
• Maximum level of extension of the mast (3).

3. Procedure of monitoring and control, according to claim 1 or 2, **characterised in that** phase 2 of monitoring and control of the installation of the base (2) of the telescopic light tower (1) comprises the following steps:
• pressing the start pushbutton (20) or powering the device,
• calculating the base (2) equilibrium indicator proportional to the horizontality of the base (2) and to the distribution of loads among the support elements (5), via the signals received in the at least one lower sensor module (4),
• comparing the base (2) equilibrium indicator to a predefined critical and warning threshold of the base and activating one of the actuation strategies:
• Validation of the correct installation of the base (2) and calibration of the at least one lower sensor module (4), with a "Base installation correct" signal being activated internally,
• Assistance for the correct installation of the base (2).

4. Procedure of monitoring and control, according to any one of the previous claims 1 to 3, **characterised in that** phase 3 of monitoring and control of the deployment of the mast comprises the following steps:
• when the "Base installation correct" signal is activated, receiving and processing the monitoring signals of the at least one upper sensor module (8) and of at least one lower sensor module (4), subsequently activating the signals of actuation on the extension mechanism (14) and/or retraction mechanism (15) of the mast (3) and/or the visual or acoustic aids (18) for the extension or retraction of the mast (3), calculating the following values:
o the presence of objects in the intended extension path of the mast (3),
o the maximum extension length according to the design, and
o the maximum extension level defined by the user;
• during the process of extending the mast (3), calculating the mast equilibrium indicator at the current level of the mast extension based on signals received from the upper sensor module (8) and the lower sensor module (4);
• comparing said levels and indicators to predefined critical and warning thresholds and activating one of the following actuation strategies:
∘ Maximum extension of the mast (3),
∘ Validation of the correct deployment of the mast (3) and definition of the maximum level of extension of the mast (3), a "Mast deployment correct" signal being activated,
∘ Retraction of the mast (3) to the maximum extension level,
∘ Activation of the safety alarm status and modification of the installation conditions of the base (2) to conditions of maximum safety and stability.

5. Procedure of monitoring and control, according to any of the claims 1 to 4, **characterised in that** phase 4 of monitoring and control of the operating conditions of the telescopic tower, is initiated if the "Base installation correct" signal and the "Mast installation correct" signal are active, with the electronic control module (13) receiving and processing the signals from the at least one lower sensor module (4) and from the at least one upper sensor module (8) to calculate the equilibrium indicator of the base (2) and the equilibrium indicator of the mast (3), comparing the said indicators with predefined critical and warning thresholds, one of the following actuation strategies being activated:
• Validation of the operating conditions of the telescopic light tower (1),
• Maximum extension of the mast (3),
• Modification of the safe operating conditions of the mast (3),
• Modification of the safe operating conditions of the base (2),
• Activation of a safety alarm status and modification of the installation conditions of the base to conditions of maximum safety and stability.

## Patentansprüche

1. Verfahren für die Überwachung und Steuerung eines teleskopischen Lichtturms (1), wobei der teleskopische Lichtturm (1) mit einem Gerät (21) versehen ist, welches mindestens ein unteres Sensormodul (4) an oder in der Nähe der Basis (2) des teleskopischen Lichtturms (1) umfasst, wobei das untere Sensormodul (4) Sensoren (6,7) umfasst, wobei das Gerät (21) weiterhin mindestens ein oberes Sensormodul (8) an oder in der Nähe des Masts (3) des teleskopischen Lichtturms (1) umfasst, wobei dieses obere Sensormodul (8) Sensoren (9, 10, 11, 12) umfasst und wobei das Gerät (21) weiterhin ein elektronisches Steuermodul (13) mit einem oder mehreren Eingängen umfasst, die mit einem unteren Sensormodul (4) und einem oberen Sensormodul (8) verbunden sind, **dadurch gekennzeichnet, dass** es die folgenden Phasen umfasst:
- die Phase 1 der Initialisierung, die die Stufe der Installation des Geräts (21) am teleskopischen Lichtturm (1) umfasst;
- die Phase 2, die die Stufen der Überwachung und Steuerung der Basis des teleskopischen Turms (2) umfasst;
- die Phase 3, die die Stufen der Überwachung und Steuerung der Entfaltung des Masts (3) umfasst;
- die Phase 4, die die Stufen der Überwachung und Steuerung der Betriebsbedingungen des teleskopischen Lichtturms (1) umfasst, wobei die Phase 1 der Initialisierung die Stufe der Installation von mindestens einem unteren Sensormodul (4), mindestens einem oberen Sensormodul (8) und einem elektronischen Steuermodul (13) umfasst, wobei das elektronische Steuermodul (13) direkt über die Ausgangsverbindungen verbunden ist, um auf eines oder mehrere der folgenden zu wirken:
* die Trägerelemente (5) der Basis (2) des teleskopischen Lichtturms (1),
* den Ausfahrmechanismus (14) des Masts (3),
* den Einfahrmechanismus (15) des Masts (3),
* den Ausrichtungsmechanismus (16) der Scheinwerfer (17),
* die visuellen oder akustischen Hilfsmittel für Anwenderanzeige (18)
* Zusatzausgänge (19);
wobei das elektronische Steuergerät weiterhin einen Signalanpassungsmodus und einen Prozessanpassungsmodus umfasst;
wobei der Signalanpassungsmodus die von dem mindestens einen unteren Sensormodul (4) und/oder mindestens einen oberen Sensormodul (8) oder irgendeinem anderen im teleskopischen Lichtturm (1) integrierten Modul übertragenen Daten anpasst und wobei der Verarbeitungsmodus die von dem mindestens einen unteren Sensormodul (4) und/oder mindestens einen oberen Sensormodul (8) oder einem anderen im teleskopischen Lichtturm (1) integrierten Modul empfangenen Daten verarbeitet, unter Berechnung und Ermittlung der sicheren Betriebsparameter oder Indikatoren oder Niveaus auf der Grundlage der vorher definierten kritischen und alarmierenden Schwellenwerte oder Grenzwerte.

2. Verfahren für die Überwachung und Steuerung nach Anspruch 1, **dadurch gekennzeichnet, dass** in Phase 1 der Initialisierung, der Verarbeitungsmodus des elektronischen Steuermoduls (13) mindestens einen oder mehrere der folgenden Indikatoren oder Niveaus berechnet, die in den folgenden Phasen des Verfahrens verwendet werden:
* Gleichgewichtsanzeige der Basis (2),
* Gleichgewichtsanzeige des Masts (3),
* Derzeitiger Ausfahrstand des Masts (3),
* Sicherer Ausfahrstand des Masts (3),
* Zulässiger Ausfahrstand des Masts (3),
* Maximaler Ausfahrstand des Masts (3).

3. Verfahren für die Überwachung und Steuerung nach Anspruch 1 oder 2, **dadurch gekennzeichnet, dass** Phase 2 der Überwachung und Steuerung der Installation der Basis (2) des teleskopischen Lichtturms (1) die folgenden Stufen umfasst:
* Betätigen der Start-Drucktaste (20) oder Einschalten des Geräts,
* Berechnung der Gleichgewichtsanzeige der Basis (2) proportional zur Horizontalität der Basis (2) und zur Verteilung der Lasten auf die Trägerelemente (5), anhand der Signale, die in dem mindestens einen unteren Sensormodul empfangen werden (4),
* Vergleich der Gleichgewichtsanzeige der Basis (2) mit einem vordefinierten kritischen und alarmierenden Grenzwert der Basis und Aktivierung einer der Auslösestrategien:
- Validierung der korrekten Installation der Basis (2) und Kalibrierung des mindestens einen unteren Sensormoduls (4) wobei intern ein Signal "Korrekte Installation der Basis", aktiviert wird,
- Hilfestellung bei der korrekten Installation der Basis (2) .

4. Verfahren für die Überwachung und Steuerung nach einem der Ansprüche 1 bis 3, **dadurch gekennzeichnet, dass** Phase 3 der Überwachung und Steuerung der Entfaltung des Masts die folgenden Stufen umfasst:
* nach Aktivierung des Signals "korrekte Installation der Basis" Empfang und Verarbeitung der Überwachungssignale des mindestens einen oberen Sensormoduls (8) und des mindestens einen unteren Sensormoduls (4), anschließend Aktivierung der Auslösesignale am Ausfahrmechanismus (14) und/oder Einfahrmechanismus (15) des Masts (3) und/oder der visuellen oder akustischen Hilfsmittel (18) zum Aus- oder Einfahren des Masts (3), unter Berechnung der folgenden Werte:
- die Anwesenheit von Objekten im beabsichtigten Ausfahrweg des Masts (3),
- die maximale Ausfahrlänge laut Entwurf und
- das maximale Ausfahrniveau, wie vom Anwender definiert;
* während des Prozesses des Ausfahrens des Masts (3), unter Berechnung der Gleichgewichtsanzeige des Masts am derzeitigen Ausfahrniveau des Masts, auf der Grundlage der Signale, die vom oberen Sensormodul (8) und dem unteren Sensormodul (4) empfangen wurden;
* Vergleich der genannten Niveaus und Anzeigen mit den vordefinierten kritischen und alarmierenden Grenzwerten und Aktivierung einer der folgenden Auslösestrategien:
- Maximaler Ausfahr des Masts (3),
- Validierung der korrekten Entfaltung des Masts (3) und Definition des maximalen Ausfahrniveaus des Masts (3), wobei ein Signal "korrekte Entfaltung des Masts" wird ausgelöst,
- Einfahren des Masts (3) auf das maximale Ausfahrniveau,
- Aktivierung des Sicherheitsalarmstatus und Anpassung der Installationsbedingungen der Basis (2) an die Bedingungen der maximalen Sicherheit und Stabilität.

5. Verfahren der Überwachung und Steuerung nach einem der Ansprüche 1 bis 4, **dadurch gekennzeichnet, dass** Phase 4 der Überwachung und Steuerung der Betriebsbedingungen des teleskopischen Turms initiiert wird, wenn das Signal "korrekte Installation der Basis" und das Signal "korrekte Installation des Masts" aktiv sind, wobei das elektronische Steuermodul (13) die Signale von dem mindestens einen unteren Sensormodul (4) und dem mindestens einen oberen Sensormodul (8) empfängt und verarbeitet, um die Gleichgewichtsanzeige der Basis (2) und die Gleichgewichtsanzeige des Masts (3) zu berechnen, wobei die genannten Indikatoren mit den vordefinierten kritischen und alarmierenden Grenzwerten verglichen werden, wobei eine der folgenden Auslösestrategien ausgelöst wird:
* Validierung der Betriebsbedingungen des teleskopischen Lichtturms (1),
* Maximaler Ausfahr des Masts (3),
* Änderung der sicheren Betriebsbedingungen des Masts (3),
* Änderung der sicheren Betriebsbedingungen der Basis (2),
* Aktivierung eines Sicherheitsalarmstatus und Anpassung der Installationsbedingungen der Basis (2) an die Bedingungen der maximalen Sicherheit und Stabilität.

## Revendications

1. Procédé de surveillance et de commande d'une tour d'éclairage télescopique (1), la tour d'éclairage télescopique (1) étant munie d'un dispositif (21) comprenant au moins un module de détection inférieur (4) disposé sur la base (2) de la tour d'éclairage télescopique (1) ou à proximité de ladite base, ledit module de détection inférieur (4) comprenant des capteurs (6, 7) ; dans lequel le dispositif (21) comprend en outre au moins un module de détection supérieur (8) disposé sur le mât (3) de la tour d'éclairage télescopique (1) ou à proximité dudit mât, ledit module de détection supérieur (8) comprenant des capteurs (9, 10, 11, 12) ; et dans lequel le dispositif (21) comprend en outre un module de commande électronique (13) comprenant une ou plusieurs entrées se reliant à un module de détection inférieur (4) et à un module de détection supérieur (8) ; **caractérisé en ce qu'**il comprend les phases suivantes :
- une première phase dite d'initialisation comprenant l'étape consistant à monter le dispositif (21) sur la tour d'éclairage télescopique (1) ;
- une deuxième phase comprenant les étapes de surveillance et de commande du montage de la base (2) de la tour télescopique ;
- une troisième phase comprenant les étapes de surveillance et de commande du déploiement du mât (3) ;
- une quatrième phase comprenant les étapes de surveillance et de commande des conditions de fonctionnement de la tour d'éclairage télescopique (1) ;
dans lequel, la première phase dite d'initialisation comprend l'étape consistant à monter au moins un module de détection inférieur (4), au moins un module de détection supérieur (8) et un module de commande électronique (13), le module de commande électronique (13) étant relié directement via les raccords de sortie dans le but d'activer un ou plusieurs des éléments précis après :
- les éléments de support (5) de la base (2) de la tour d'éclairage télescopique (1) ;
- le mécanisme d'extension (14) du mât (3) ;
- le mécanisme de rétraction (15) du mât (3) ;
- le mécanisme d'orientation (16) des projecteurs d'éclairage (17);
- les supports visuels ou les appareils acoustiques (18) destinés à fournir des indications à un utilisateur ;
- des sorties auxiliaires (19) ;
dans lequel le dispositif de commande électronique comprend en outre un mode d'adaptation de signaux et un mode d'adaptation de traitement ;
dans lequel le mode d'adaptation de signaux va adapter les données transmises par ledit au moins un module de détection inférieur (4) et/ou ledit au moins un module de détection supérieur (8) ou n'importe quel autre élément intégré dans la tour d'éclairage télescopique (1); et dans lequel le mode de traitement va traiter les données reçues à partir dudit au moins un module de détection inférieur (4) et/ou dudit au moins un module de détection supérieur (8) ou de n'importe quel autre élément intégré dans la tour d'éclairage télescopique (1), calculer et déterminer des niveaux ou des indicateurs ou des paramètres d'exploitation en toute sécurité en se basant sur des valeurs limites ou des seuils d'avertissement et critiques prédéfinis.

2. Procédé de surveillance et de commande, selon la revendication 1, **caractérisé en ce que** dans la première phase dite d'initialisation, le mode de traitement du module de commande électronique (13) calcule au moins un ou plusieurs indicateurs ou niveaux parmi ceux indiqués ci-après qui vont être utilisés dans les phases suivantes du procédé :
- un indicateur d'équilibre de la base (2) ;
- un indicateur d'équilibre du mât (3) ;
- le niveau en vigueur d'extension du mât (3) ;
- le niveau de sécurité d'extension du mât (3) ;
- le niveau autorisé d'extension du mât (3) ; ;
- le niveau maximal d'extension du mât (3).

3. Procédé de surveillance et de commande, selon la revendication 1 ou 2, **caractérisé en ce que** la deuxième phase dite de surveillance et de commande du montage de la base (2) de la tour d'éclairage télescopique (1) comprend les étapes suivantes consistant à :
- appuyer sur le bouton poussoir de démarrage (20) ou activer le dispositif ;
- calculer l'indicateur d'équilibre de la base (2) de manière proportionnelle à l'horizontalité de la base (2) et à la distribution des charges parmi les éléments de support (5), via les signaux reçus dans ledit au moins un module de détection inférieur (4) ;
- comparer l'indicateur d'équilibre de la base (2) à un seuil d'avertissement et critique prédéfini de la base et activer une des stratégies d'activation, à savoir ;
- la validation du montage correct de la base (2) et l'étalonnage dudit au moins un module de détection inférieur (4), un signal « montage de la base correct » étant activé en interne ;
- l'assistance pour le montage correct de la base (2).

4. Procédé de surveillance et de commande, selon l'une quelconque des revendications précédentes 1 à 3, **caractérisé en ce que** la troisième phase dite de surveillance et de commande du déploiement du mât comprend les étapes suivantes consistant à :
- lorsque le signal « montage de la base correct » est activé, recevoir et traiter les signaux de surveillance dudit au moins un module de détection supérieur (8) et/ou dudit au moins un module de détection inférieur (4) ; activer ensuite des signaux d'actionnement du mécanisme d'extension (14) et/ou du mécanisme de rétraction (15) du mât (3) et/ou les supports visuels ou les appareils acoustiques (18) destinés à l'extension ou à la rétraction du mât (3) ; calculer les valeurs suivantes :
- la présence d'objets dans la trajectoire prévue du mât (3) ;
- la longueur d'extension maximale en fonction du modèle ; et
- le niveau d'extension maximal défini par l'utilisateur ;
- au cours du processus d'extension du mât (3), calculer à l'indicateur d'équilibre du mât au niveau en vigueur de l'extension du mât en se basant sur des signaux reçus à partir du module de détection supérieur (8) et du module de détection inférieur (4) ;
- comparer lesdits niveaux et lesdits indicateurs à des seuils critiques et d'avertissement prédéfinis, et activer une des stratégies d'actionnement indiquées ci-après :
- l'extension maximale du mât (3) ;
- la validation du déploiement correct du mât (3) et la définition du niveau maximal d'extension du mât (3), le signal « déploiement correct du mât » étant activé ;
- la rétraction du mât (3) jusqu'au niveau d'extension maximal ;
- l'activation de l'état d'alarme de sécurité et la modification des conditions de montage de la base (2) afin d'obtenir des conditions de stabilité et de sécurité maximale.

5. Procédé de surveillance et de commande, selon l'une quelconque des revendications 1 à 4, **caractérisé en ce que** la quatrième phase dite de surveillance et de commande des conditions d'exploitation de la tour télescopique est déclenchée lorsque le signal « montage de la base correct » et le signal « montage du mât correct » sont actifs, le module de commande électronique (13) recevant et traitant les signaux émis par ledit au moins un module de détection inférieur (4) et par ledit au moins un module de détection supérieur (8) afin de calculer l'indicateur d'équilibre de la base (2) et l'indicateur d'équilibre du mât (3) ; comparer lesdits indicateurs à des seuils de surveillance et critiques prédéfinis, une des stratégies d'actionnement suivantes étant activée :
- la validation des conditions d'exploitation de la tour d'éclairage télescopique (1):;
- l'extension maximale du mât (3) ;
- la modification des conditions de fonctionnement du mât (3) en toute sécurité ;
- la modification des conditions de fonctionnement de la base (2) en toute sécurité ;
- l'activation d'un état d'alarme de sécurité et la modification des conditions de montage de la base pour obtenir des conditions de stabilité et de sécurité maximale.
